# EUROPEAN PATENT APPLICATION

(11) **EP 3 786 777 A1**
(43) Date of publication of application: **03.03.2021**
(21) Application number: 20193562.4
(22) Date of filing: 31.08.2020
(51) Int. Cl.: G06F 3/12, G06F 40/166

(54) **LABEL PRINTER, LABEL DIAGNOSIS SYSTEM AND LABEL DIAGNOSIS PROGRAM**

(30) Priority: 29.08.2019 JP 2019157436; 17.07.2020 JP 2020123304
(71) Applicant: Max Co., Ltd., Tokyo 103-8502 (JP)
(72) Inventor: UCHIYAMA, Yasuyuki, Tokyo, 103-8502 (JP); SHIGETA, Naoki, Tokyo, 103-8502 (JP)
(74) Representative: Samson & Partner Patentanwälte mbB

(57) **Abstract**

A label printer includes: a capturing unit configured to capture label data; a diagnosis unit configured to compare the label data captured by the capturing unit with regulation information, and to determine whether the label data conforms to the regulation information; and an output unit configured to output a determination result of the diagnosis unit.

## Description

### TECHNICAL FIELD

The present invention relates to a label printer configured to print a variety of information relating to food on a label, and a label diagnosis system and a diagnosis program for diagnosing a label.

### BACKGROUND ART

In the related art, a label printer is used to issue a deadline label by printing information of raw materials, additives, best-before date, expiration date and the like on a label.

As Food Labeling Act is revised, various labeling on labels will be mandatory from April, 2020. For this reason, a user needs to newly make label data or to correct existing label data, in conformity to the law revision.

For example, PTL 1 discloses technology of assisting in making a raw material label. Also, PTL 2 discloses technology of labeling detailed substance names for each classification of additives so as to facilitate selection and input. Also, PTL 3 discloses technology of issuing a notification for urging check of nutrient ingredient information when a raw material is changed.
PTL1: JP-A-2004-330425
PTL2: Japanese Patent No. 2,629,085B
PTL3: JP-A-2018-158541

In the related art, it is laborious for a user who issues a label by using a label printer to newly make label data in conformity to law revisions and rules that are used in industries, companies, stores and the like. However, it is impossible to determine whether label data conforms to the laws and the rules used in industries, companies, stores and the like by using the existing label data, and to effectively use the existing label data.

### SUMMARY OF INVENTION

A label printer, a label diagnosis system and a label diagnosis program in accordance with the present disclosure have been made to solve the above problems, and are to determine whether label data conforms to the laws and the rules used in industries, companies, stores and the like by using the existing label data.

According to the present disclosure, there is provided a label printer comprising: a capturing unit configured to capture label data; a diagnosis unit configured to compare the label data captured by the capturing unit with regulation information, and to determine whether the label data conforms to the regulation information; and an output unit configured to output a determination result of the diagnosis unit.

According to the present disclosure, there is also provided a label printer comprising: a capturing unit configured to capture label data in which an item and a content of the item to be printed on a label are associated; a diagnosis unit configured to compare the label data captured by the capturing unit with regulation information, and to determine whether an item, which is a diagnosis target, and a content thereof conform to the regulation information; and an output unit configured to output a determination result of the diagnosis unit in a form of a label that is output based on the label data, in conformity to an item and a content of the item corresponding to the determination result.

According to the present disclosure, there is also provided a label diagnosis system comprising: a capturing unit configured to capture label data; a diagnosis unit configured to compare the label data captured by the capturing unit with regulation information, and to determine whether the label data conforms to the regulation information; and an output unit configured to output a determination result of the diagnosis unit.

According to the present disclosure, there is also provided a label diagnosis system comprising: a capturing unit configured to capture label data in which an item and a content of the item to be printed on a label are associated; a diagnosis unit configured to compare the label data captured by the capturing unit with regulation information, and to determine whether an item, which is a diagnosis target, and a content thereof conform to the regulation information; and an output unit configured to output a determination result of the diagnosis unit in a form of a label that is output based on the label data, in conformity to an item and a content of the item corresponding to the determination result.

According to the present disclosure, there is also provided a label diagnosis program comprising: capturing label data; comparing the captured label data with regulation information and determining whether the label data conforms to the regulation information; and outputting a determination result.

According to the present disclosure, there is also provided a label diagnosis program comprising: capturing label data in which an item and a content of the item to be printed on a label are associated; comparing the captured label data with regulation information and determining whether an item, which is a diagnosis target, and a content thereof conform to the regulation information; and outputting a determination result in a form of a label that is output based on the label data, in conformity to an item and a content of the item corresponding to the determination result.

According to the present invention, it is possible to determine whether the label data conforms to the laws and the like by capturing label data such as image data, layout data, text data and the like of the label. Also, it is possible to output whether label data conforms to the laws and the like, and to output a determination result in conformity to an output form of the label. Thereby, it is possible to determine whether the label data conforms to regulations such as laws by using the existing label data, so that it is possible to effectively use the existing label data.

### BRIEF DESCRIPTION OF DRAWINGS

FIG. 1 is a functional configuration view depicting an example of a label diagnosis system of the present embodiment.
FIG. 2 is a functional configuration view depicting an example of a label printer of the present embodiment.
FIG. 3 is a configuration view depicting an example of the label printer of the present embodiment.
FIG. 4 is a flowchart depicting an example of operations of the label diagnosis system of the present embodiment.
FIG. 5A illustrates an extraction example of a diagnosis item depicting an example of operations of the label diagnosis system of the present embodiment.
FIG. 5B illustrates an extraction example of a diagnosis item depicting an example of operations of the label diagnosis system of the present embodiment.
FIG. 5C illustrates an extraction example of a diagnosis item depicting an example of operations of the label diagnosis system of the present embodiment.
FIG. 6 is a flowchart depicting another example of operations of the label diagnosis system of the present embodiment.
FIG. 7A illustrates a corrected example of label data.
FIG. 7B illustrates a corrected example of label data.
FIG. 7C illustrates a corrected example of label data.
FIG. 7D illustrates a corrected example of label data.
FIG. 8A illustrates another corrected example of label data.
FIG. 8B illustrates another corrected example of label data.
FIG. 9 illustrates an example of allergen highlighting.

### DESCRIPTION OF EMBODIMENTS

Hereinbelow, embodiments of the label diagnosis system, the label diagnosis program and the label printer of the present invention will be described with reference to the drawings.

### <Configuration Example of Label Diagnosis System of Present Embodiment>

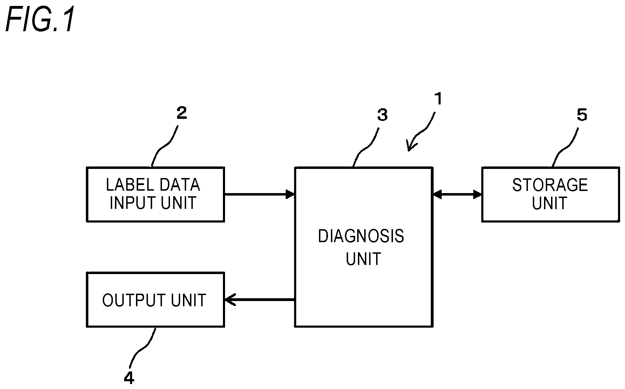

FIG. 1 is a functional configuration view depicting an example of a label diagnosis system of the present embodiment.

A label diagnosis system 1 of the present embodiment is configured by a label printer. Also, the label diagnosis system 1 of the present embodiment is configured by various information processing devices such as a personal computer, a smartphone, a tablet and the like. Also, the label diagnosis system 1 of the present embodiment is configured by a cloud to which the label printer and the various information processing devices are connected.

The label diagnosis system 1 includes a label data input unit 2 configured to acquire label data, a diagnosis unit 3 configured to determine whether the acquired label data conforms to regulation information, and an output unit 4 configured to output a determination result of the label data.

The regulation information includes, for example, matters prescribed by regulations of laws and the like such as Food Labeling Act, and peculiar regulations that are used in industries, companies, stores, in which food and the like are sold, and the like relating to use of labels.

The label data input unit 2 is an example of the capturing unit and is configured to acquire label data of layout data, text data or image data. The label data input unit 2 is configured by a function of acquiring label data of a designated label from a storage unit 5 in which existing label data is stored. Also, the label data input unit 2 is configured by a camera for imaging a printed label. Also, the label data input unit 2 is configured by a function of uploading the label data to the cloud.

The diagnosis unit 3 is configured to recognize characters included in the label data by data processing, image processing and the like, and to subdivide the characters into words and sentences by character string recognition processing of recognizing a character string, character string analysis processing of analyzing the recognized character string, and the like. The diagnosis unit 3 is configured to identify raw materials, additives, a deadline, nutrient ingredients and the like from the recognized words and sentences, and to perform a form check and a content check based on the regulation information.

The output unit 4 includes a display unit such as a display, for example, and is configured to output a determination result of the form check and the content check by display, printing and the like. Also, the output unit 4 is configured to output corrected contents based on the determination result of the form check and the content check by display, printing and the like.

### <Configuration Example of Label Printer of Present Embodiment>

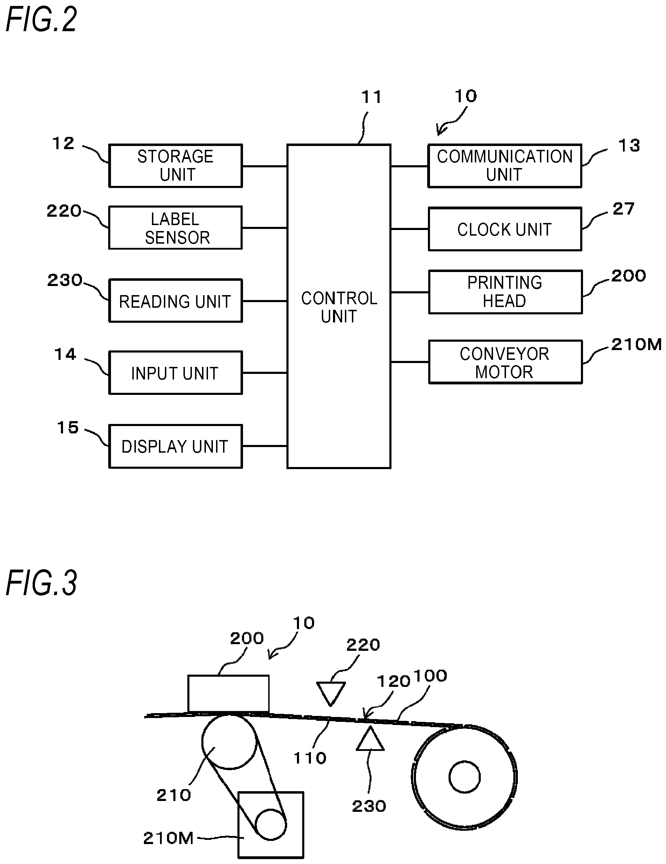

FIG. 2 is a functional configuration view depicting an example of a label printer of the present embodiment, and FIG. 3 is a configuration view depicting an example of the label printer of the present embodiment.

A label printer 10 is mounted with a label 120 with a mount provided in a form where a long mount 110 having a label 100 or the like bonded thereon is wound. The label printer 10 includes a printing head 200 configured to perform printing on the label 100 bonded to the label 120 with a mount, a platen roller 210 provided facing the printing head 200 and configured to convey the label 120 with a mount, and a conveyor motor 210M configured to drive the platen roller 210. Also, the label printer 10 includes a label sensor 220 configured to detect whether there is a label, a tip end position of a label, and the like, and a reading unit 230 configured to read label recognition information printed on a backside of the mount 110.

The label printer 10 includes a control unit 11 configured to execute a label diagnosis program and to diagnose whether an existing label and a label to be newly made conform to the laws, in addition to a function of printing a usual label. Also, the label printer 10 includes a storage unit 12 in which the label diagnosis program, data necessary to diagnose a label, and the like are stored. The control unit 11 includes a microprocessor referred to as a CPU and an MPU, and the like. The storage unit 12 is configured by a storage device such as a RAM, a flash memory and the like.

Also, the label printer 10 includes a communication unit 13 to which an information processing device such as a personal computer, a smartphone, a tablet and the like, a detachable external memory such as a semiconductor memory, a camera, a cloud and the like are connected, and a clock unit 27 configured to generate date and time information for specifying date and time so as to calculate deadline information such as best-before date, expiration date, and the like.

Also, the label printer 10 includes an input unit 14 configured to receive an operation for executing the label diagnosis program, an operation for printing a usual label, and the like. Also, the label printer 10 includes a display unit 15 on which an operation screen for executing the label diagnosis program, a diagnosis result by the label diagnosis program, an operation screen for printing a usual label, and the like are displayed.

In a configuration where the label diagnosis system 1 is implemented in the label printer 10 as the label diagnosis program is executed, the label data input unit 2 is configured by a function of acquiring the existing label data from the storage unit 12, an external semiconductor memory (not shown) and the like. Also, the label data input unit 2 is configured by a camera, a camera of a smartphone and the like connected to the label printer 10 via the communication unit 13. Also, the label data input unit 2 is configured by a function of uploading label data to the cloud via the communication unit 13.

The diagnosis unit 3 is configured by the control unit 11 of the label printer 10, the label diagnosis program that is executed by the control unit 11, and the like. The output unit 4 is configured by the display unit 15 of the label printer 10, and a printing function of the printing head 200 and the like.

In the meantime, in a configuration where the label diagnosis system 1 is implemented in the information processing device such as a personal computer, a smartphone and a tablet, the label data input unit 2 is configured by a function of acquiring the existing label data from the label printer 10, an external semiconductor memory (not shown) and the like. Also, the label data input unit 2 is configured by an external camera, an embedded camera, and the like. Also, the label data input unit 2 is configured by a function of uploading label data to the cloud.

The diagnosis unit 3 is configured by a control unit of the various information processing devices, the label diagnosis program that is executed by the control unit, and the like. The output unit 4 is configured by a display unit of the various information processing devices, and the like.

In a configuration where the label diagnosis system 1 is implemented in the cloud, the label data input unit 2 is configured by a function of uploading label data from the label printer 10, a semiconductor memory, the various information processing devices, a camera and the like capable of connecting to the cloud.

The diagnosis unit 3 is configured by a control unit of a server configuring the cloud, the label diagnosis program that is executed by the control unit, and the like. The output unit 4 is configured by the label printer 10, a display unit of the various information processing devices and the like capable of connecting to the cloud.

### <Configuration Example of Database That is Used in Label Diagnosis System>

Table 1 illustrates an example of a laws and rules database in which items to be diagnosed and law information relating to Food Labeling Act as corresponding regulation information and the like are associated with each other. In the laws and rules database (D/B) shown in Table 1, items to be diagnosed such as raw materials, additives, deadlines, nutrient ingredients and the like, corresponding regulation information such as form rules, database names to be referred to, conversion rules for non-conformity to laws, and the like are associated. For example, when the label item is "raw material", the division is "allergy", and the check item is "form check", it is checked whether there is an allergen item, as the regulation information (form rule). Also, in the form check for allergy, it is checked whether allergen is arranged in a labeling form identified from other substances. As a labeling example of identifying an allergen from the other substances, labeling of allergen and other substances is identified by change of font information (character style, character size and the like), style information (Italics, thickness of character such as bold character, underline, surrounding by a square ruled line, character color and the like), and background information (highlight such as marker and shading, background contrast color, and the like) of allergen.

**[Table 1]**

| Laws and Rules D/B | | | | | | |
|---|---|---|---|---|---|---|
| | Label Items | Divisions | Check Items | Regulation Information (Form Rules) | Reference D/B | Conversion Rules for Non-Conformity to Laws |
| 1 | raw material | raw material | form check content check | Item of raw material is separately made. Additive is not included in item of raw material. (Raw materials are identified from additives by a ruled line, a symbol (/) and line feed.) | raw materials D/B additives D/B | Divide raw materials and additives if they are mixed. (Identify them by a ruled line, a symbol and line feed, based on setting) 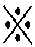 Since there are forms that can be mixed, the useris allowed to select whether to divide or to accept the mixed state if they are mixed. |
| 2 | raw material | place of origin | content check | A place of origin of a top raw material of raw materials in terms of weight is labeled. | raw materials D/B | Indicate the place of origin it it is not indicated. |
| 3 | raw material | place of origin | content check | The weight by country is labeled. | raw materials D/B | Make and indicate the weight by country, if required. |
| 4 | raw material | allergy | form check | It has an allergen item | allergens D/B | If a raw material that should be indicated is included in the raw materials, check whether there is an allergen item and make it if there is no allergen item |
| 5 | raw material | allergy | content check | Indicate substances included in the allergen D/B (refer to the allergen D/B) | allergen D/B product D/B raw materials D/B | Indicate substances included in the allergen D/B, if they are not indicated. 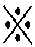 If there is no allergen, which is prescribed as being mandatorily indicated in the allergens D/B, of allergens contained in used raw materials, indicate the same. |
| 6 | additive | additive | form check content check | Item of additive is separately made. Raw material is not included in item of additive. (Additives are identifed fromraw materials by a ruled line, a symbol (/) and line feed.) | raw materials D/B additives D/B | Divide raw materials and additives if they are mixed. (Identify them by a ruled line, a symbol and line feed, based on setting) 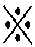 Since there are forms that can be mixed, the useris allowed to select whether to divide or to accept the mixed state if they are mixed. |
| 7 | additive | additive | content check | Additives included in the additives D/B. | additives D/B | Highlight additives that are not included in the additives D/B. |
| 8 | deadline | deadline | form check | It is identified whether ┌/┘ is included in year, month and day of the date and time information. | product D/B | If "/" is included, convert the same into "." and "year, month and day". |
| 9 | nutrient ingredient | nutrient ingredient | form check | Mandatory items are listed in order of energy, protein, lipid, carbohydrate, and salt equivalent. | nutrient ingredients D/B | Make missed mandatory items and contents thereof. |
| 10 | nutrient ingredient | nutrient ingredient | form check | Protein : indicate up to one place | nutrient ingredients D/B | Calculate and indicate the number after the decimal point. |
| | | | | Lipid : indicate up to one place | | |
| | | | | Carbohydrate : indicate up to one place | | |
| | | | | Salt : indicate up to one decimal place | | |
| | | | | (unit: g, mg and µg can be used) | | |
| 11 | nutrient ingredient | nutrient ingredient | form check | 5.5 points when the font size is 8 points or more and the area that can be indicated is 150 cm² or less | nutrient ingredients D/B | If the character protrudes from the character frame by 8 points, adjust the number of character points according to the label size. |
| 12 | nutrient ingredient | nutrient ingredient | content check | The amount of ingredients does not exceed the content of one packaging unit or the unit weight. (Abnormal value detection) | product D/B | Change into the unit weight or the ingredient weight according to the unit weight. |

Table 2 shows an example of a raw materials database. The raw materials database (D/B) shown in Table 2 is a database designated as a reference in the laws and rules database shown in Table 1, in which a product name of food, origin information of food, information about a substance in food that causes allergy or intolerance, and information of additive in food are associated. In the meantime, the substance that causes allergy or intolerance is also referred to as allergen.

**[Table 2]**

| Raw Materials D/B | | | | |
|---|---|---|---|---|
| | Product Name | Place of origin | Allergen | Additives |
| 1 | ○○ Company Mayonnaise | Domestic production | Egg, Soybean, Apple | Seasoning (Amino acid) |
| 2 | ○Δ Company Mayonnaise | A Country, B Country, C Country | Egg, Soybean | Seasoning (Amino acid) |
| 3 | ○□ Company Mayonnaise | D Country, E Country, others | Egg, Soybean | Seasoning (Amino acid) |
| 4 | Δ□ Company Mayonnaise | A Country or B Country | Egg, Soybean | No additives |
| : | : | : | : | : |

Table 3 shows an example of an additives database. The additives database (D/B) shown in Table 3 is a database designated as a reference in the laws and rules database shown in Table 1, in which a product name of food and a use are associated.

**[Table 3]**

| Additives D/B | | |
|---|---|---|
| | Product name | Use |
| 1 | Zinc salts (Zinc gluconate) | Fortifier |
| 2 | Zinc acid water | Bactericide |
| 3 | Sodium zincate | Bleach, Bactericide |
| 4 | Zinc nitride | Manufacturing application |
| 5 | Adipic acid | Acidulant |
| : | : | : |

Table 4 shows an example of an allergens database. The allergens database (D/B) shown in Table 4 is a database designated as a reference in the laws and rules database shown in Table 1, in which presence or absence of labeling obligation and a name of allergen in food are associated.

**[Table 4]**

| Allergens D/B | | |
|---|---|---|
| | Obligation | Name |
| 1 | Obligation | Egg |
| 2 | Obligation | Milk |
| 3 | Obligation | Wheat |
| : | : | : |
| 8 | Encouragement | Salmon spawn |
| 9 | Encouragement | Kiwi fruit |
| : | : | : |

Table 5 shows an example of a products database. The products database (D/B) shown in Table 5 is a database designated as a reference in the laws and rules database shown in Table 1, in which a product name, a raw material name in a product, a raw material name used in a product, information of additive in a product, a weight of a product and deadline information of a product are associated.

**[Table 5]**

| Products D/B | | | | | | |
|---|---|---|---|---|---|---|
| | Name | Raw material name | Used raw material | Additive s | Interior content | Deadline |
| 1 | Macaroni salad | Macaroni, Mayonnaise, Onion | ○○ Company Mayonnaise, Δ○ Company Macaroni | Seasoning (Amino acid) | 200g | 24 hours |
| 2 | Potato salad | Potato, Mayonnaise, Onion | ○□ Company Potato, ○Δ Company Mayonnaise | Seasoning (Amino acid), Thickener (Xantham cam) | 200g | 36 hours |
| 3 | Crab salad | Crab strick, Onion, Mayonnaise | Δ□ Company Crab stick, □○ Company Mayonnaise | Seasoning (Amino acid) | 200g | 36 hours |
| : | : | : | : | : | : | : |

Table 6 shows an example of a nutrient ingredients database. The nutrient ingredients database (D/B) shown in Table 6 is a database designated as a reference in the laws and rules database shown in Table 1, in which a product name of food, and an amount of energy, an amount of protein, an amount of lipid, an amount of carbohydrate and a salt equivalent per unit (g) are associated.

**[Table 6]**

| Nutrient ingredients D/B | | | | | | | |
|---|---|---|---|---|---|---|---|
| | Product name | Unit (g) | Energy (kcal) | Protein (g) | Lipid (g) | Carbohydrate (g) | Salt equivalent (mg) |
| 1 | ○○ Company Mayonnaise | 100 | 703 | 1.5 | 75.3 | 4.5 | 1800 |
| 2 | ○Δ Company Wheat | 1000 | 3680 | 80 | 17 | 759 | 20 |
| 3 | Δ○ Company Macaroni | 500 | 1890 | 65 | 11 | 360 | 10 |
| 4 | Δ□ Company Crab stick | 80 | 67 | 9.4 | 0.4 | 6.5 | 660 |
| : | : | : | : | : | : | : | : |

The diagnosis unit 3 performs the form check and the content check for raw materials by referring to the raw materials database shown in Table 2 in which a variety of information about raw materials is stored, based on the laws and rules database shown in Table 1. Also, the diagnosis unit 3 performs the form check and the content check for additives by referring to the additives database shown in Table 3 in which a variety of information about additives is stored, based on the laws and rules database shown in Table 1. Also, the diagnosis unit 3 performs the form check and the content check for allergens by referring to the allergens database shown in Table 4 in which a variety of information about allergens is stored, based on the laws and rules database shown in Table 1.

Also, the diagnosis unit 3 performs the form check and the content check for additives by referring to the products database shown in Table 5 in which a variety of information about products is stored, based on the laws and rules database shown in Table 1 that is the regulation information database. Also, the diagnosis unit 3 performs the form check and the content check for nutrient ingredients by referring to the nutrient ingredients database shown in Table 6 in which a variety of information about nutrient ingredients is stored, based on the laws and rules database shown in Table 1.

The laws and rules database, the raw materials database, the additives database, the allergens database, the products database and the nutrient ingredients database are stored in the storage unit 5.

In the configuration where the label diagnosis system 1 is implemented in the label printer 10, each database is stored as internal data in the storage unit 12. Also, in a configuration where the label diagnosis system 1 is combined with the label printer 10 and the various information processing devices, each database is stored as external data in the storage unit of the various information processing devices. Also, in a configuration where the label diagnosis system 1 is combined with the label printer 10 and the cloud, each database is stored as external data in the storage unit of the server configuring the cloud.

### <Operation Example of Label Diagnosis System of Present Embodiment>

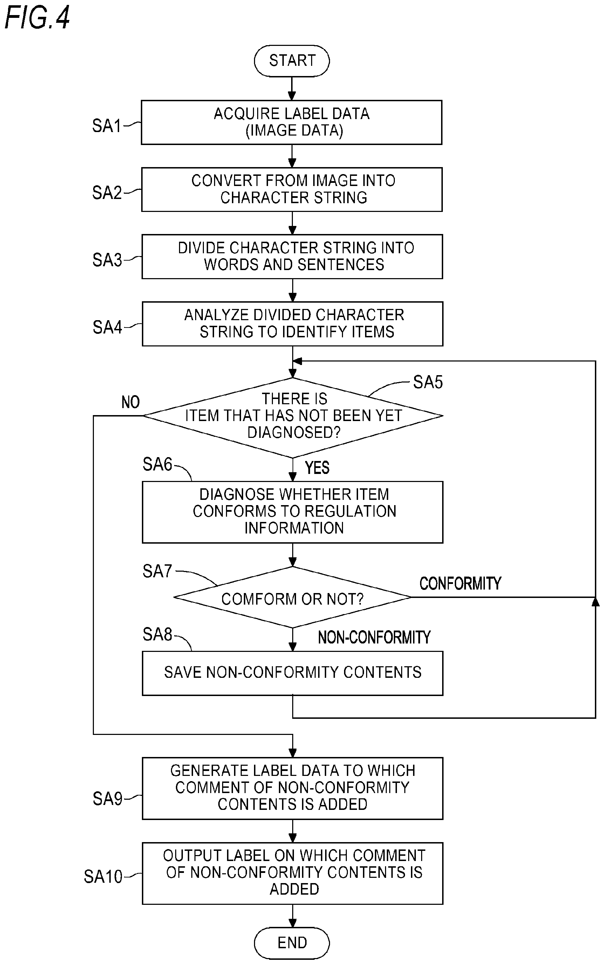

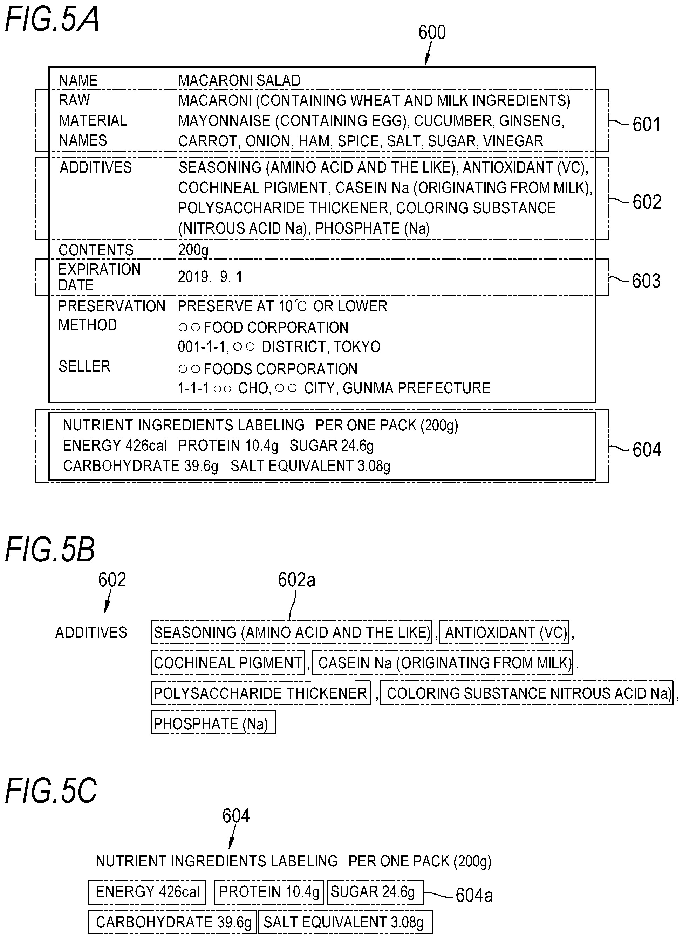

FIG. 4 is a flowchart depicting an example of operations of the label diagnosis system (the label diagnosis program, the label printer) of the present embodiment, and FIGS. 5A to 5C illustrate an extraction example of a diagnosis item depicting an example of operations of the label diagnosis system of the present embodiment. In the meantime, in the configuration where the label diagnosis system 1 is implemented in the label printer 10 as the label diagnosis program is executed in the label printer 10, operations of the label diagnosis system 1 can be regarded as operations of the label printer 10.

In step SA1 of FIG. 4, the label diagnosis system 1 acquires label data by the label data input unit 2. When the label data is acquired as image data as a result of imaging by a camera, the diagnosis unit 3 recognizes characters by image processing in step SA2, and subdivides the characters into words and sentences by character string recognition processing of recognizing a character string, character string analysis processing of analyzing the recognized character string, and the like, in step SA3.

The diagnosis unit 3 analyzes the words and sentences to identify items of raw materials, additives, deadline, nutrient ingredients and the like, in step SA4. For example, as shown in FIG. 5A, the diagnosis unit 3 identifies an item 601 indicating raw materials, an item 602 indicating additives, an item 603 indicating a deadline and an item 604 indicating nutrient ingredients from label data 600 that is image data.

The diagnosis unit 3 refers to the laws and rules database shown in Table 1 to determine whether there is an item, which has not been yet diagnosed, of the items identified from the label data, in step SA5.

When it is determined that there is an item that has not been yet diagnosed, the diagnosis unit 3 refers to the database designated for each item in the laws and rules database to perform the form check and the content check, based on the regulation information, in step SA6.

For example, when the item of the diagnosis target is an additive, the diagnosis unit 3 extracts the item 602 of additives to identify individual contents 602a of the additives, as shown in FIG. 5B. The diagnosis unit 3 refers to the regulation information corresponding to additives to perform the form check for the item of additive, based on the laws and rules database. Also, the diagnosis unit 3 refers to the raw materials database shown in Table 2 and the additives database shown in Table 3 to perform the form check for the item of additive.

In the form check for the item of additive, the diagnosis unit 3 diagnoses whether the item of additive is made separately from the other items of raw materials and the like. Also, in the content check for the item of additive, the diagnosis unit 3 diagnoses whether a raw material is included in the item of additive by comparison with the raw materials database. Also, the diagnosis unit 3 diagnoses whether the corresponding additive is registered in the additives database by comparison with the additives database.

When the item of the diagnosis target is a nutrient ingredient, the diagnosis unit 3 extracts the item 604 of nutrient ingredients to identify individual contents and numerical values 604a of the nutrient ingredients, as shown in FIG. 5C. The diagnosis unit 3 refers to the regulation information corresponding to nutrient ingredients to perform the form check for the item of nutrient ingredient, based on the laws and rules database. Also, the diagnosis unit 3 refers to the products database shown in Table 3 and the nutrient ingredients database shown in Table 6 to perform the content check for the item of nutrient ingredient.

In the form check for the item of nutrient ingredient, the diagnosis unit 3 diagnoses whether the mandatory items to be indicated in the nutrient ingredients are indicated in predetermined order, whether the numbers of places of numerical values are appropriate and whether the character sizes are appropriate by comparison with the nutrient ingredients database. Also, in the content check for the item of nutrient ingredient, the diagnosis unit 3 diagnoses whether the indicated contents are appropriate by comparison with the products database.

In the meantime, when the item of the diagnosis target is a raw material or deadline, the diagnosis unit 3 extracts the item 601 of raw materials to identify contents of the raw materials, in a similar manner. The diagnosis unit 3 refers to the regulation information corresponding to raw materials to perform the form check for the item of raw material, based on the laws and rules database. Also, the diagnosis unit 3 refers to the raw materials database, the additives database, the allergens database and the products database to perform the form check for the item of raw material.

The diagnosis unit 3 performs the form check and the content check for the item of the diagnosis target, based on the regulation information, and determines whether the item conforms to the regulation information, in step SA7. The diagnosis unit 3 adds contents of an item, which does not conform to the regulation information, to a non-conformity contents list saved in the storage unit 5, in step SA8.

For example, when the item of the diagnosis target is an additive, if it is determined that raw materials or allergens or raw materials and allergens are mixed in the item of additives, the diagnosis unit 3 saves the corresponding non-conformity contents. The description "raw materials or allergens or raw materials and allergens are mixed in the item of additives" indicates that raw materials and additives and the like are not identified in the contents of the form rules shown in Table 1. Therefore, when raw materials and additives and the like are identified in the contents of the form rules shown in Table 1, the diagnosis unit 3 can determine that raw materials and additives and the like are identified. Also, when the item of the diagnosis target is a nutrient ingredient, if it is determined that the nutrient ingredients are not indicated in predetermined order, the diagnosis unit 3 saves the corresponding non-conformity contents. Also, if it is determined that the numerical value of the nutrient ingredient is not a specific number of places, the diagnosis unit 3 saves the corresponding non-conformity contents. Also, when the item of the diagnosis target is a raw material, the diagnosis unit 3 refers to the raw materials database and the allergens database. When an allergen is contained in raw materials, the diagnosis unit 3 determines whether the allergen is included in the item of raw materials and whether the allergen is identified from the raw materials. When it is determined that the allergen is included in the item of raw materials but is not identified from the raw materials, the diagnosis unit 3 saves the corresponding non-conformity contents. Also, when the item of the diagnosis target is a raw material, the diagnosis unit 3 refers to the raw materials database and the allergens database. When a raw material is an allergen, the diagnosis unit 3 determines whether the allergen is identified from the raw materials. When it is determined that the allergen is not identified from the raw materials, the diagnosis unit 3 saves the corresponding non-conformity contents.

When it is determined that there is no item that has not been yet diagnosed, the diagnosis unit 3 adds a comment of the non-conformity contents to the image of the label and makes an image of a label, in step SA9.

In step SA10, the diagnosis unit 3 displays, on the output unit 4, the image of the label to which the comment of the non-conformity contents is added, and outputs the same by printing.

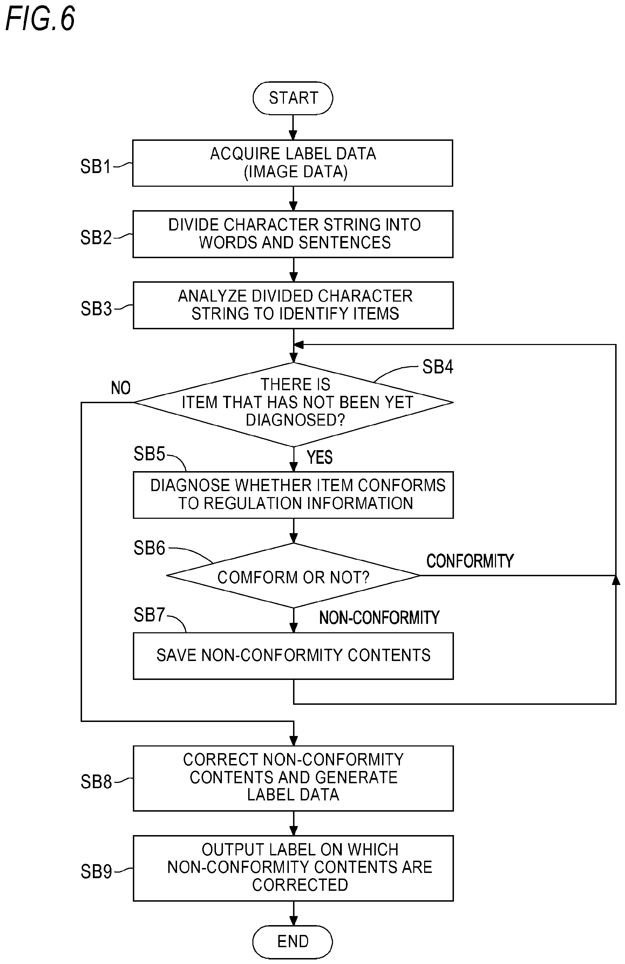

FIG. 6 is a flowchart depicting another example of operations of the label diagnosis system of the present embodiment.

In step SB1 of FIG. 6, the label diagnosis system 1 acquires label data by the label data input unit 2. When the label data is acquired as layout data and text data, the diagnosis unit 3 subdivides the label data into words and sentences by character string recognition processing of recognizing a character string, character string analysis processing of analyzing the recognized character string, and the like, in step SB2.

The diagnosis unit 3 analyzes the words and sentences to identify items of raw materials, additives, deadline, nutrient ingredients and the like, in step SB3. For example, as shown in FIG. 5A, the diagnosis unit 3 identifies the item 601 indicating raw materials, the item 602 indicating additives, the item 603 indicating a deadline and the item 604 indicating nutrient ingredients from label data 600.

In step SB4, the diagnosis unit 3 refers to the laws and rules database to determine whether there is an item, which has not been yet diagnosed, of the items identified from the label data.

When it is determined that there is an item that has not been yet diagnosed, the diagnosis unit 3 refers to the database designated for each item in the laws and rules database to perform the form check and the content check, based on the regulation information, in step SB4.

The diagnosis unit 3 performs the form check and the content check for the item of the diagnosis target, based on the regulation information, and determines whether the item conforms to the regulation information, in step SB6. The diagnosis unit 3 adds contents of an item, which does not conform to the regulation information, to the non-conformity contents list saved in the storage unit 5, in step SB7.

For example, when the item of the diagnosis target is an additive, if it is determined that raw materials or allergens or raw materials and allergens are mixed in the item of additives, the diagnosis unit 3 saves the corresponding non-conformity contents. Also, when the item of the diagnosis target is a nutrient ingredient, if it is determined that the nutrient ingredients are not indicated in predetermined order, the diagnosis unit 3 saves the corresponding non-conformity contents. Also, if it is determined that the numerical value of the nutrient ingredient is not a specific number of places, the diagnosis unit 3 saves the corresponding non-conformity contents. Also, when the item of the diagnosis target is a raw material, the diagnosis unit 3 refers to the raw materials database and the allergens database. When an allergen is contained in raw materials, the diagnosis unit 3 determines whether the allergen is included in the item of raw materials and whether the allergen is identified from the raw materials. When it is determined that the allergen is included in the item of raw materials but is not identified from the raw materials, the diagnosis unit 3 saves the corresponding non-conformity contents. Also, when the item of the diagnosis target is a raw material, the diagnosis unit 3 refers to the raw materials database and the allergens database. When a raw material is an allergen, the diagnosis unit 3 determines whether the allergen is identified from the raw materials. When it is determined that the allergen is not identified from the raw materials, the diagnosis unit 3 saves the corresponding non-conformity contents.

When it is determined that there is no item that has not been yet diagnosed, the diagnosis unit 3 corrects the non-conformity contents, based on the conversion rules saved in the laws and rules database 50, and makes an image of a label, in step SB8.

For example, for the non-conformity contents indicating that raw materials are mixed in the item of additives, the raw materials are deleted from the item of additives, and the raw materials deleted from the item of additives are moved (rearranged) to the item of raw materials. Also, for the non-conformity contents indicating that the nutrient ingredients are not indicated in predetermined order, rearrangement is performed based on the regulation information. Also, for the non-conformity contents indicating that the numerical value of the nutrient ingredient is not a specific number of places, the number of places is matched by rounding off and rounding processing. Also, for the non-conformity contents indicating that the allergen is not included in raw materials, an allergen substance name is added to a rear side of raw material name labeling, and the allergen substance name is enclosed in a parenthesis to indicate that the allergen is included in the raw material. Also, for the non-conformity contents indicating that the allergen is included but is not identified from the raw materials, the allergen is identified from the other substances by change of the font information such as a character style, a character size and the like, change of the style information such as Italics, a thickness of character such as a bold character, underline, surrounding by a square ruled line, a character color and the like, and change of the background information such as highlighting such as marker and shading, a background contrast color, and the like.

In step SB9, the diagnosis unit 3 displays, on the output unit 4, an image of a label whose non-conformity contents are corrected, and output the same by printing.

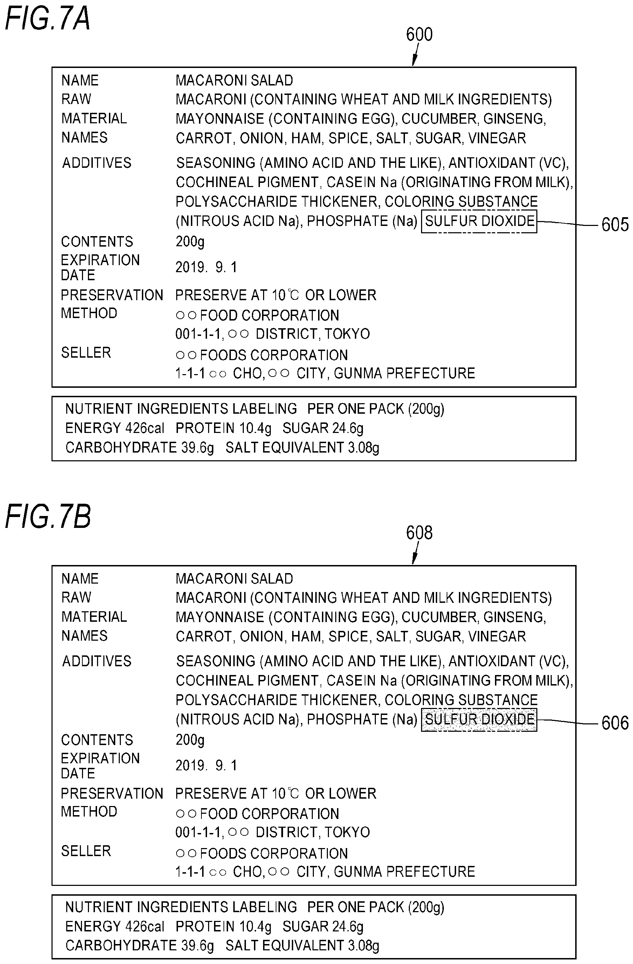

FIGS. 7A to 7D illustrate corrected examples of label data. As shown in FIG. 7A, it is assumed that an additive 605, which is not allowed to be used in the regulation information, is included in the label data 600.

In this case, as the image of a label in which the comment of the non-conformity contents is added, an image 608 of a label in which highlighting 606 such as marker and shading is performed for a substance name of an additive, which is not allowed to be used in the regulation information, is displayed and output by printing, as shown in FIG. 7B.

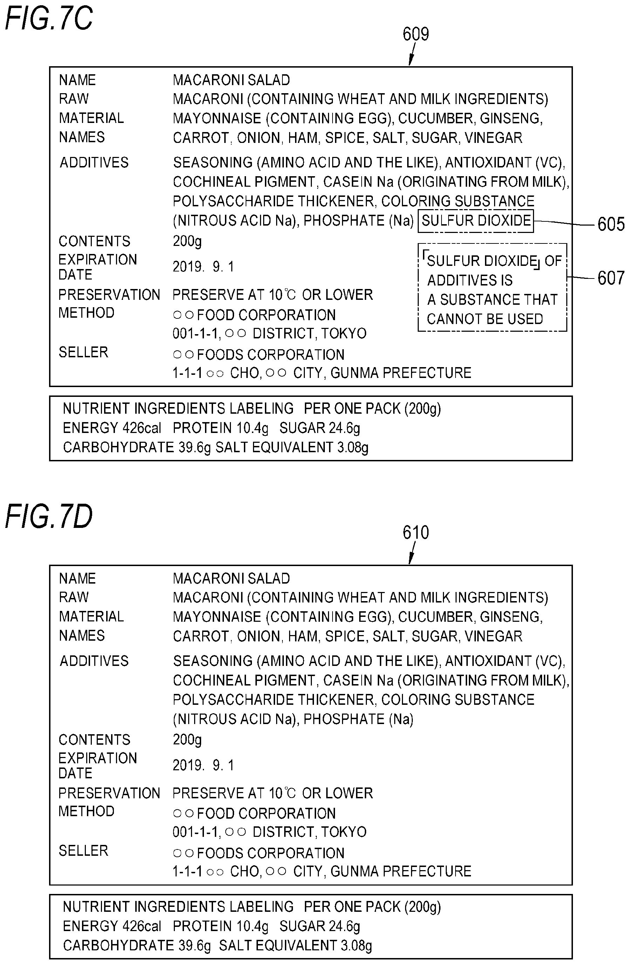

Also, as the image of a label in which the comment of the non-conformity contents is added, an image 609 of a label to which character information 607 indicating that the additive is not allowed to be used is added in correspondence to the substance name of the additive, which is not allowed to be used in the regulation information, is displayed and output by printing, as shown in FIG. 7C.

Alternatively, as shown in FIG. 7D, an image 610 of a label in which the substance name of the additive, which is not allowed to be used in the regulation information, is deleted is displayed and output by printing.

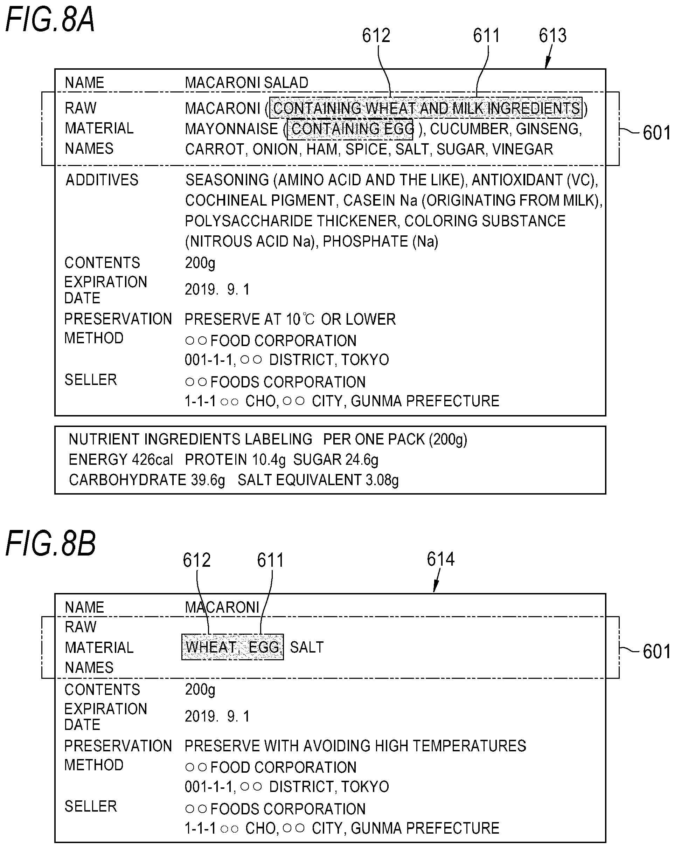

FIGS. 8A and 8B illustrate other corrected examples of label data. In the item 601 indicating raw materials, it is assumed that an allergen is included in the raw materials. In this case, as the image of a label in which the non-conformity contents are corrected, as shown in FIG. 8A, an image 613 of a label in which highlighting 612 by change of the style information by surrounding by a square ruled line and by change in background information by shading is performed for an allergen substance name 611 included in the raw materials is displayed and output by printing. In the meantime, for the non-conformity contents indicating that an allergen is not included in raw materials, an allergen substance name is added to a rear side of raw material name labeling, the allergen substance name is enclosed in a parenthesis to indicate that the allergen is included in the raw material, and the allergen substance name is highlighted. In the meantime, as the highlighting 612, for the allergen substance name 611 included in the raw materials, change of the font information such as a character style, a character size and the like, change of the style information such as Italics, a thickness of character such as bold character, underline, a character color and the like, and change of the background information such as highlighting such as marker and shading, a background contrast color, and the like may also be performed, in addition to the shown example.

Also, in the item 601 indicating raw materials, for the non-conformity contents indicating that an allergen is included in raw materials but the allergen substance name is not highlighted, as the image of a label in which the non-conformity contents are corrected, as shown in FIG. 8B, an image 614 of a label in which the highlighting 612 is performed for the allergen substance name 611 included in the raw materials is displayed and output by printing.

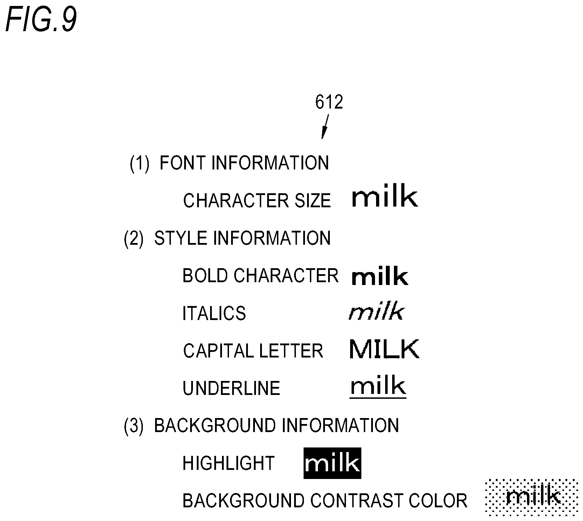

FIG. 9 illustrates an example of allergen highlighting. In the meantime, "milk" is exemplified as an allergen. As an example of the highlighting 612, a character size is increased, as the font information shown in (1). As the style information shown in (2), a character is thickened, a character is shown by Italics, a character is shown by a capital letter and a character is underlined. As the background information shown in (3), a marker is applied to a character string, and a background color of a character string is changed. In the meantime, the font information, the style information and the background information may also be combined as necessary, such as a combination of change in size of a character and underlining of a character. As the highlighting 612 of an allergen shown in FIGS. 8A and 8B, the example shown in FIG. 9 is also possible, in addition to the examples shown in FIGS. 8A and 8B.

In the below, specific Cases are described.

### Case 1

The real object of the existing food label is captured by a camera of a smartphone or a tablet, which is then uploaded to the cloud in which the label diagnosis program is executed. By the character extraction function of the cloud, the food label is divided into character strings of items relating to the laws. The items indicate food labeling such as name, raw material, additive, content, deadline, nutrient ingredient, seller, manufacturer, and the like. The divided character strings are subdivided as words and sentences by the character string analysis processing. Based on the laws and rules database shown in Table 1, the word information in the divided nutrient ingredient character string is compared with each database designated as the reference in the laws and rules database for detection of presence or absence of a mandatory item. When it is determined that a mandatory item is not described, the image of the captured label is added with a non-conformity comment, which is then displayed.

### Case 2

The layout data of the existing food label is loaded into the label printer 10 via an external memory and a network. Data included as a character string is compared with items relating to the laws to specify the items by the character string recognition processing. Herein, the character string of specific additive information as the additive information is subdivided into words by the character string analysis processing. The subdivided additive words are compared with the designated additives in the additives database shown in Table 3. When a word that is not included in the designated additives is extracted, the extracted word is highlighted or is converted into an inverted character string, for example, and the label is then printed. In this case, a label indicating literally the non-conformity contents may be printed or may be displayed only on a screen so that a label with non-conformity portions is not used.

### Case 3

A recipe on which a weight, ingredients and origin of a food material are described is loaded in a form of image or data into the information processing device such as a personal computer. In the information processing device, the food label is divided into character strings of items relating to the laws. The divided character strings are subdivided into words and sentences by the character string analysis processing. For example, in the case of raw materials, food with a large content is extracted from the weight information included, and it is determined whether the place of origin thereof is included in the information. If it is determined that the origin information is not included, or even when the origin information is included, if it is determined that the information is insufficient as a result of comparison of the origin information with the raw materials database shown in Table 2, the non-conformity contents such as "The place of origin of the largest weight flour is not indicated" are displayed on the screen. At this time, if corrected layout making processing is designated, corrected layout data may be made.

### Case 4

The non-conformity contents determined in Cases 1 to 3 are saved in the non-conformity contents database (D/B) shown in Table 7 provided in the label printer 10, each information processing device, and the cloud server so that a manager and a person in charge of manufacturing can check the same.

**[Table 7]**

| Non-conformity contents D/B | | | | | | | | |
|---|---|---|---|---|---|---|---|---|
| | Diagnosis date | Diagnosis product | Nutrient ingredient | Additive s | Place of origin | Allergen | Non-conformity contents | Processing |
| 1 | 2019.7.29 | Macaroni salad | ○ | × | ○ | ○ | There are illegal additive s | Print indicated portions, save corrected example layout |
| 2 | 2019.7.30 | Potato salad | × | ○ | ○ | ○ | No nutrient ingredient item | Diaplay indicated portions |
| : | : | : | : | : | : | : | : | : |

In the meantime, the label printer, the label diagnosis system and the label diagnosis program of the present invention can also be applied to local rules that are used in specific industries, companies, stores and the like. In this case, the label items, divisions, regulation information (form rules), reference databases, and conversion rules for non-conformity in the laws and rules database can be replaced with contents conforming to rules of the specific industries or companies.

## Claims

1. A label printer comprising:
a capturing unit configured to capture label data;
a diagnosis unit configured to compare the label data captured by the capturing unit with regulation information, and to determine whether the label data conforms to the regulation information; and
an output unit configured to output a determination result of the diagnosis unit.

2. The label printer according to Claim 2, wherein
in the label data, an item and a content of the item to be printed on a label are associated,
the diagnosis unit is configured to compare the label data with the regulation information to determine whether an item, which is a diagnosis target, and a content thereof conform to the regulation information, and
the output unit is configured to output the determination result in a form of a label that is output based on the label data, in conformity to an item and a content of the item corresponding to the determination result.

3. The label printer according to Claim 2, further comprising a storage unit in which the regulation information corresponding to an item and a content of the item to be printed on a label is stored, wherein
the diagnosis unit is configured to recognize characters from the label data, to recognize a character string from the characters, to recognize a word and a sentence from the character string, and to identify the item, which is the diagnosis target, and the content of the item, and
the diagnosis unit is configured to compare the content of the item, which is the diagnosis target, with the regulation information stored in the storage unit to determine whether the content conforms to the regulation information.

4. The label printer according to Claim 3, wherein
the regulation information comprises a form rule based on the regulation information of the item to be printed on the label, and a list information of substances based on the regulation information, which can be included in the item, and
the diagnosis unit is configured to determine conformity and non-conformity of information relating to a form of the item, which is the diagnosis target, and the form rule based on the regulation information, and to determine conformity and non-conformity of information relating to a substance included in the item and the list information of the substances based on the regulation information.

5. The label printer according to Claim 4, wherein
the diagnosis unit is configured to separate the content of the item, which is the diagnosis target, by a substance name and a numerical value or a symbol, and to determine conformity and non-conformity of the information relating to the form of the item, which is the diagnosis target, and information relating to a form based on the regulation information and to determine conformity and non-conformity of the information relating to the substance included in the item and the list information of the substances based on the regulation information, for each of the substance name and the numerical value or the symbol which are separated,
preferably, the diagnosis unit is configured to determine whether a substance name not included in the list information is included in the content of the item, which is the diagnosis target,
further preferably, the diagnosis unit is configured to determine whether a form not included in the form rule is included in the item, which is the diagnosis target.

6. The label printer according to Claim 4 or 5, wherein
the form rule comprises a mandatory item that should be printed in the content of the item, and
the diagnosis unit is configured to determine whether the mandatory item based on the form rule is included for each word or numerical value included in the content of the item.

7. The label printer according to any one of Claims 2 to 6, wherein when the item, which is the diagnosis target, and the content of the item do not conform to the regulation information, the diagnosis unit is configured to convert a portion, which does not conform to a law, into an item and a content based on the regulation information, based on a predetermined conversion rule.

8. The label printer according to any one of Claims 1 to 7, wherein
the diagnosis unit is configured to determine a plurality of items, which are diagnosis targets,
preferably, the diagnosis unit is configured to convert a plurality of items, which are diagnosis targets.

9. The label printer according to any one of Claims 1 to 8, wherein
an item, which is a diagnosis target, indicates at least a raw material, an additive, a deadline, a nutrient ingredient, and a substance that causes allergy or intolerance,
preferably, when an item, which is a diagnosis target, is a raw material and an additive, the diagnosis unit is configured to determine whether a content of the item is arranged with being identified into the raw material and the additive.

10. The label printer according to Claim 9, wherein
the diagnosis unit is configured to determine whether the raw material and the additive included in the content of the item, which is the diagnosis target, are arranged with being identified by ruled line information, a line feed or a symbol, or
when the raw material and the additive included in the content of the item, which is the diagnosis target, are arranged with being mixed, the diagnosis unit is configured to identify and rearrange the raw material and the additive separately from each other.

11. The label printer according to Claim 9, wherein when the deadline included in the content of the item, which is the diagnosis target, is date information, if an unusable symbol is included in delimiter information for delimiting a year, a month and a day of date, the diagnosis unit is configured to convert the unusable symbol into usable delimiter information.

12. The label printer according to Claim 9, wherein
the item, which is the diagnosis target, indicates a substance that is contained in a raw material and causes allergy or intolerance,
preferably, when the item, which is the diagnosis target, is a raw material, and a substance that causes allergy or intolerance is included in the raw material, the diagnosis unit is configured to determine whether a substance that causes allergy or intolerance is included in a raw material.

13. The label printer according to Claim 9 or 12, wherein the diagnosis unit is configured to determine whether the substance that causes allergy or intolerance, which is included in the content of the item, which is the diagnosis target, is identified from other substances by change of font information of a character, change of style information of a character or change of background information of a character.

14. The label printer according to one of Claims 1 to 13, wherein the regulation information is law information or a rule that is used in an industry, a company and a store.

15. A label diagnosis system comprising:
a capturing unit configured to capture label data;
a diagnosis unit configured to compare the label data captured by the capturing unit with regulation information, and to determine whether the label data conforms to the regulation information; and
an output unit configured to output a determination result of the diagnosis unit.

16. A label diagnosis program comprising:
capturing label data;
comparing the captured label data with regulation information and determining whether the label data conforms to the regulation information; and
outputting a determination result.
